# EUROPEAN PATENT APPLICATION

(11) **EP 0 543 180 A1**
(43) Date of publication of application: **26.05.1993**
(21) Application number: 92118231.7
(22) Date of filing: 24.10.1992
(51) Int. Cl.: H04N 1/21, G03B 17/24

(54) **Camera system with latent and digital image capture**

(30) Priority: 19.11.1991 US 794187
(71) Applicant: EASTMAN KODAK COMPANY, Rochester, New York 14650-2201 (US)
(72) Inventor: Bell, Cynthia Sue, c/o Eastman Kodak Company, Rochester, New York 14650-2201 (US)
(74) Representative: Blickle, K. Werner, Dipl.-Ing.

(57) **Abstract**

Camera (20) with simultaneous latent image and electronic image capture in which the image data is permanently stored on a magnetic layer on the photographic film (10) allowing for playback and review of multiple images on a built-in display device (24) in the camera.

## Description

This invention relates to the field of camera systems adapted to capture images in latent form on photographic film and in digital form for subsequent electronic playback.

Camera systems capable of capturing images in latent form on photographic film and simultaneously, or nearly simultaneously, capturing and recording the same image in digital form are known. Examples of such systems are disclosed in US Patents 4,714,962, 4,742,369 and 4,949,117. Such known systems utilize an electronic image sensor and associated circuits to electronically capture an image, digitize it and record it either in an internal memory in the camera or else on a separate mass recording medium such as a magnetic disk or magnetic tape. Use of an in-camera memory limits the number of images that can be reviewed by a photographer using a built camera display since the stored memory is generally written over by subsequent images. The use of separate mass recording media adds bulk and expense to the apparatus used by the photographer and has the disadvantage that the recorded image data can be separated from the film. This can be a problem, for example, when ordering prints from a photofinisher or when attempting to playback the image for subsequent viewing on an electronic display.

Briefly described, the invention is directed to photographic film camera apparatus adapted to receive photographic film having a magnetic recording layer thereon, wherein the camera comprises means for capturing on the photographic film a latent of a scene being photographed, an electronic image sensor, optical means for focusing an image onto said image sensor, image signal conversion circuits for converting analog image signals from said image sensor into digital image data and memory means for temporarily storing the digital image data in the camera. The camera apparatus of the invention further comprises a magnetic recording head and recording circuit means for permanently recording said stored digital image data on said film magnetic recording layer. In a further embodiment of the invention, the camera apparatus includes means for recording frame number identification on the magnetic layer, user input means for selecting one or more of said images recorded on the magnetic layer for subsequent playback and display means for visually displaying said selected images.

In the drawings:

Fig. 1 is a cross section diagram of photographic film bearing a magnetic recording layer useful in the present invention.

Fig. 2 is a plan view of the film of Fig. 1 illustrating parallel dedicated recording tracks in a virtually transparent magnetic layer on the film.

Fig. 3 is a rear schematic view of a camera embodying the present invention.

Fig. 4 is a side section view of the camera of Fig. 3.

Fig. 5 is a cutaway side view of a portion of the camera of Fig. 3.

Fig. 6 is a top plan section view of a camera illustrating an arrangement of magnetic recording elements useful in the present invention.

Fig. 7 is a schematic block diagram of component elements of a camera embodying the present invention.

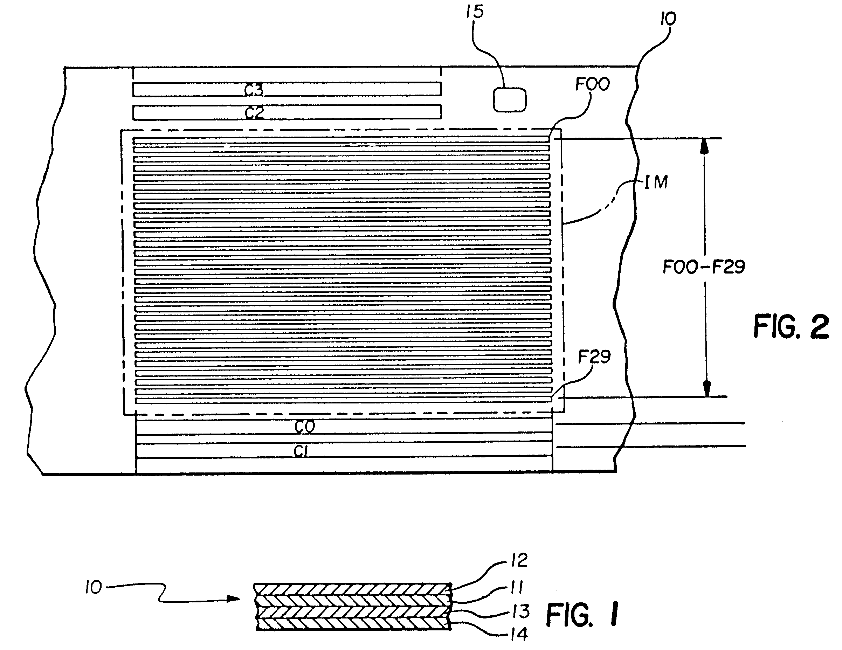

In Fig. 1, there is shown a cross-section view of a strip of color negative film 10 useful in the present invention which includes a base 11, various well known photo-chemical layers 12 on one side of the base and a virtually transparent magnetic layer 13 on the other. An anti-static and lubricating layer 14 preferably overlies the magnetic layer 13. In Fig. 2, film strip 10, shown in plan view, optionally includes perforations 15 spaced along the film edge at regular intervals matching the pitch of a metering pawl in a camera adapted to use the film strip 10. The pitch corresponds to the pitch between adjacent image frames represented by the dot-dash line IM.

For purposes of recording data in the magnetic layer 13, each frame area along the film strip 10 associated with an image frame may be formatted as shown in Fig. 2 and more fully described in commonly assigned US Patent 4,977,419, the disclosure of which is incorporated herein by reference. Thus, the frame area is divided into a plurality of predetermined longitudinal track locations designated in the drawing as outermost tracks C0-C3 and innermost tracks F00-F29. As described more fully in the aforesaid '419 patent, certain of the tracks may be reserved for recording of information in the camera using magnetic recording means included in the camera. In addition, certain of the tracks may be reserved for use by the photofinisher. Additionally, and in accordance with a feature of the invention, certain of the tracks may be used F00-F29 may be reserved for recording of digitally encoded representaive of the image photographically captured on the photosensitive layer 12 on the film.

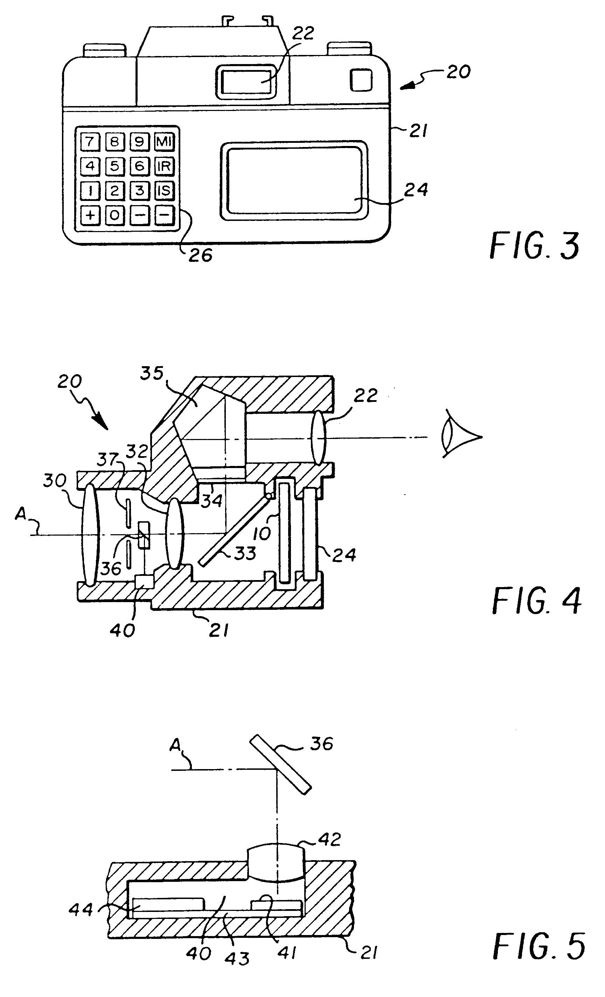

Fig. 3 is a rear view of an exemplary single lens reflex (SLR) camera 20 adapted for embodiment of the present invention and, as such, is shown as comprising a main body 21, a viewfinder 22, an image display panel 24 and a user input keyboard 26. Fig. 4 is a side sectional view of the same camera and shows imaging lenses 30 and 32 which direct incoming light along an optical axis A to a hinged reflecting mirror 33 which reflects the incoming light to a ground glass viewing screen 34. The image on screen 34 is viewed through a roof penta prism 35 and viewfinder 22. When a picture is taken, mirror 33 swings up to allow the incoming light to expose film 10. The exposure of film 10 is controlled by a combiniation diaphragm/shutter indicated schematically at 37.

An electronic image can be recorded in camera 20 through the use of a solid state image sensor unit 40 which receives incoming light from a beam splitter 36 located along optical axis A. Referring to Fig. 5, light from beam splitter 36 is focused onto an image sensor device 41, such as an area array CCD, by means of a condenser lens 42. Sensor device 41 may be mounted on a printed circuit board 43 along with a support integrated circuit (IC) chip 44. The details of the electronic image capture are more fully described in commonly assigned US Patent 4,949,117, the disclosure of which is incorporated herein by reference. When a picture is taken, the image captured on the image sensor unit 40 is processed for storage in the camera in accordance with a feature of the invention as described below.

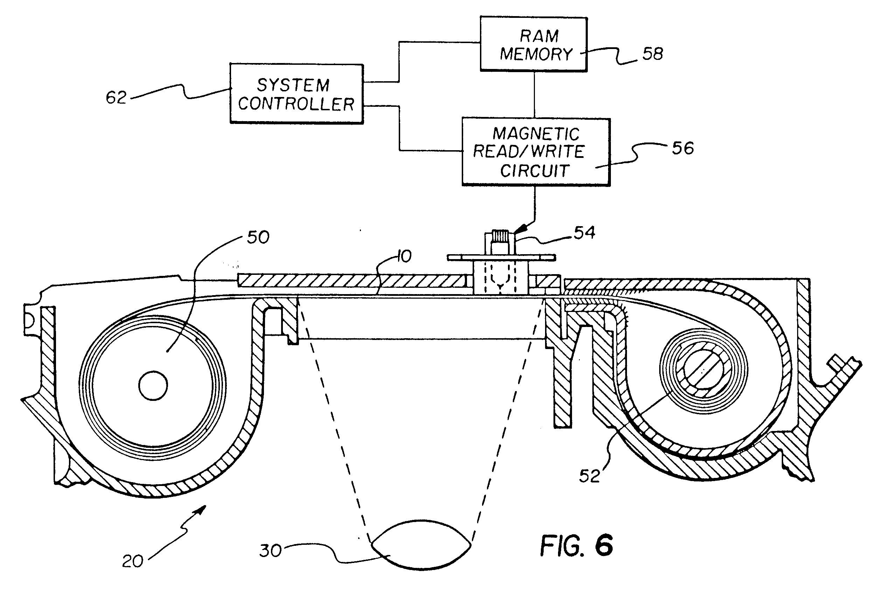

Fig 6. is a schematic illustration of a camera incorporating magnetic recording elements used in the present invention. Camera 20 transports the film strip 10 between the reels 50 and 52 of a film cartridge and a take-up sprocket, respectively, conforming to the format of the perforations 15 of Fig. 1. Camera 20 includes a magnetic read/write head 54 in near proximity with the magnetic layer 13 on the unsensitized side of the film strip 10. A microprocessor-based system controller 62 embodied in chip 44 (Fig. 5) controls magnetic data recording or playback by head 54 through the magnetic read/write circuit 56. Temporary storage of the data is provided by a random access memory (RAM) 58.

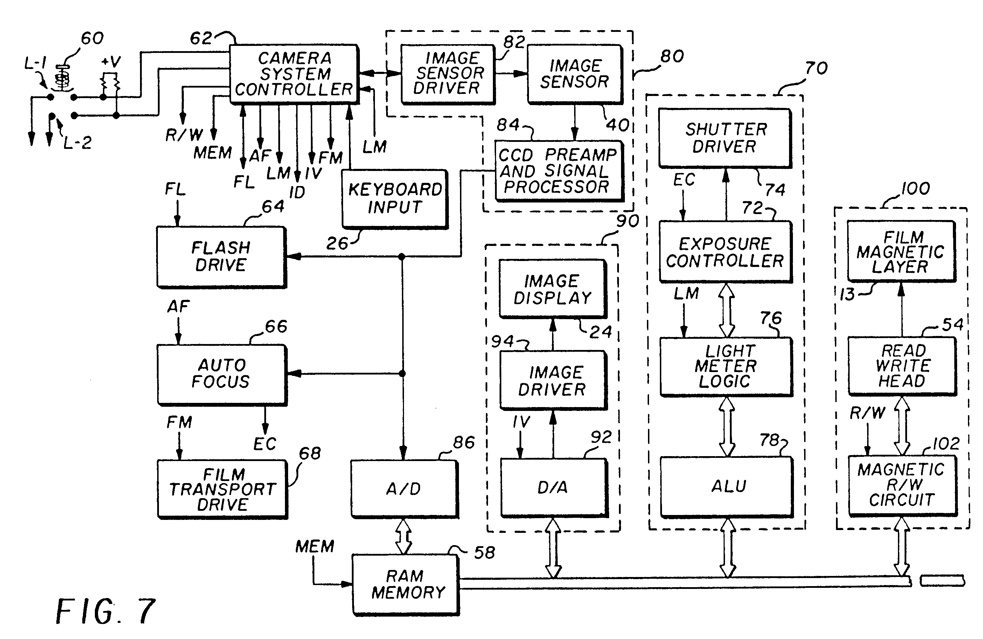

Referring to Fig. 7, there is shown a functional block diagram of camera apparatus which, in part, embodies features of the present invention. The camera apparatus includes a shutter button 60 which generates signals at two levels to indicate "composing" and "exposing" action in the picture-taking process. The camera also includes camera system controller 62 which receives inputs from user operated buttons on keyboard 26, such as a multiple image select button (MI), image review select button (IR) and image storage select button (IS).

Other modules in the camera electronically controlled in known manner by system controller 62 include flash drive 64, auto focus unit 66, film transport drive 68 and exposure module 70. Exposure module 70 includes exposure control 72 which operates to control shutter drive 74 to obtain desired image exposure based on data from light meter logic unit 76 and arithmetic logic circuit 78. Electronic image module 80 includes image sensor 40 driven by image sensor driver 82 to produce electronic image signals via CCD preamp and signal processor 84 and A/D converter to RAM memory unit for temporary storage in the camera. Module 100, including magnetic read/write circuit 102 and read/write head 54, comprises means for permanently recording stored digital image data from RAM 58 on film magnetic layer 13 of film strip 10.

In operation of the camera apparatus of the invention, the user initiates image capture by depressing the shutter button 60 half way down to compose the image. At this time system controller 62 causes light meter logic unit 76 to determine readings of illuminant and light level, activates autofocus setting unit 66 and causes the image sensor driver unit 82 to remove any accumulated charge in the CCD sensor. When the user depresses the shutter button fully, the camera continues in the image capture process to determine the appropriate exposure and to select and set an aperture value. In the case of a single lens reflex camera, such as illustrated in Figs. 4 and 5, this would be immediately followed by raising of the reflecting mirror 33 and opening of the shutter 35 to capture the image on photographic film 10 while simultaneously initiating integration of the image on the CCD sensor. If necessary, flash unit 68 is also initiated by system controller 62. Upon completion of the image capture, the controller initiates readout of the electronic image. The electronic image passes from the image sensor into the CCD preamp and signal processing module, then into the A/D converter 86 where it is converted to digital form. The digital image then passes into the RAM memory unit 58 for temporary storage and also to be make the image data available for display purposes. To display the image, the data is read out from the RAM memory unit 58 into a D/A converter 92. The analog image signal is converted to a suitable display format, e.g NTSC format, as required by the display 24 and then is scanned into the display 24 itself. This process is repeated so that the photographer may view a still electronic image of what was captured on film 10.

After the image is captured on the photosensitive layer 12 of the film strip 10, the camera proceeds with its normal function of advancing the film to the next available image frame position. Unless the user has disabled the select image storage by means of button IS on keyboard 26 (e.g to save on unnecessary battery drain), during this film advance operation system controller 62 causes the image stored in RAM memory unit 58 to be recorded on the magnetic layer 13 on film strip 10. Thus during this period, the digital image data is read out from the RAM memory 58 and passes into the magnetic read/write circuit 102 where it is encoded and then recorded on the magnetic layer 13 by the read/write head 54 as the film is advanced to the next frame.

To review a previously recorded image on the electronic display, the user enables the select image review button (IR) on keyboard 26. System controller 62 waits for an appropriate amount of time for a frame number to be selected on the user keyboard input. If no entry is made in the time allowed, the controller 62 initiates retrieval of the last image stored in RAM memory 58, otherwise it initiates retrieval of the requested image. In an aspect of the invention, selection of an image other than that available in memory 58 is accomplished by causing the film transport drive module 68 to switch its drive transmission to the reverse direction, initiates RAM memory 58 to "save" mode and switches the R/W circuit to "read" mode. As the film is transported, the frame numbers are sensed and when it is sensed that the frame to be reviewed has reached the read/write head, the controller causes the head to begin image data retrieval for storage in the RAM memory 58. After the image data is stored in the RAM, film transport is stopped and the controller enables the image display operation as previously described.

An advantageous feature of the present invention is that recording of the images on the magnetic layer permits the user to view multiple images side-by-side. To do this the user enables both the select image review button (IR) and the select multiple images button (MI) on the keyboard 26. The process of identifying the images to be compared is the same as for a single image. The camera controller 62 waits for an appropriate amount of time for the first frame number to be selected on the user keyboard. If no entry is made in the time allowed, the camera initiates retrieval of the last image stored. The number of images that can be simultaneously reviewed is limited by the amount of available RAM storage capacity. The image retrieval process is also the same as the single image case. Upon storing the data in the RAM memory 58, the camera controller 62 initiates the display operation. However, instead of transmitting every digital pixel value to the display, a subsampling of pixel values from memory 58 is used. For example, if four images are to be displayed, then every fourth pixel from each image is passed to image driver 94.

When the retrieved images are being displayed, the camera controller 62 is programmed to wait for an appropriate amount of time for another frame number to be selected on the user keyboard. If no entry is made in the time allowed, the camera initiates the repositioning of the film so that the camera is ready for the next exposure. This is accomplished by signaling the film transport module 68 to switch its drive transmission to the film advance direction and then signaling the transport until the film is stopped with the next blank frame is positioned properly under the R/W head.

It will be appreciated from the foregoing that what has been described is a simple and effective camera apparatus for permanently storing image data directly on film by recording the data on a magnetic layer on the film. This provides an advantage over other image storage methods such as floppy disk or tape storage in which the image data is capable of being disassociated from the photographic image.

The invention has been described in detail with particular reference to a presently preferred embodiment, but it will be understood that variations and modifications can be effected within the spirit and scope of the invention.

## Claims

1. Photographic film camera apparatus adapted to receive photographic film having a magnetic recording layer thereon, said camera comprising:
an electronic image sensor (41);
optical means for focusing an image onto said image sensor (42);
image signal conversion circuits (80,86) for converting analog image signals from said image sensor into digital image data;
memory means (58) for storing said digital image data;
a magnetic recording head (54);
and recording circuit means (56,100) for recording said stored digital image data on said film magnetic recording layer.

2. Camera apparatus of claim 1 including means for initiating recording (68,100) of said digital image data onto said magnetic layer when said film is transported, after the taking of a picture, to the next available image frame position.

3. Camera apparatus of claim 1 including a magnetic read head (54), an image display module (80) and circuit (92,94) means for retrieving digital image data stored on said magnetic layer and visually displaying said image on said image display module.

4. Camera apparatus of claim 3 including means (54,100) for recording frame identification information on said film, means (62) for selecting at least one frame for visual display of the corresponding image and means (68) for transporting said film in the camera to said selected frame for display of said corresponding image.
